# EUROPÄISCHE PATENTSCHRIFT

(11) **EP 3 498 624 B1**
(45) Veröffentlichungstag und Bekanntmachung des Hinweises auf die Patenterteilung: **23.09.2020**
(21) Anmeldenummer: 17207216.7
(22) Anmeldetag: 14.12.2017
(51) Int. Cl.: B65D 30/24

(54) **SACK FÜR LOSES MATERIAL**
BAG FOR LOOSE MATERIAL
SAC POUR MATIÈRE EN VRAC

(43) Veröffentlichungstag der Anmeldung: 19.06.2019
(73) Patentinhaber: Starlinger & Co Gesellschaft m.b.H., 1060 Wien (AT)
(72) Erfinder: FÜRST, Herbert, 2540 Bad Vöslau (AT)
(74) Vertreter: Margotti, Herwig Franz

(56) Entgegenhaltungen:
- EP-A1- 2 857 322
- EP-A1- 3 017 940
- EP-B1- 0 758 992
- EP-B1- 2 441 574
- DE-A1- 3 941 300

## Beschreibung

Die Erfindung betrifft einen Sack für loses Material mit den Merkmalen des Oberbegriffs des Anspruchs 1, ein Verfahren zur Herstellung eines Sacks nach dem Oberbegriff des Anspruchs 13 und eine Vorrichtung zur Herstellung eines Sacks nach dem Oberbegriff des Anspruchs 17.

Aufgrund ihrer hohen Festigkeit und Beständigkeit gegenüber Feuchtigkeit haben sich Säcke aus Kunststoffbändchengewebe, insbesondere Polyolefin- oder Polyesterbändchengewebe, als beliebtes Verpackungsmittel etabliert. Üblicherweise wird als Ausgangsmaterial für solche Säcke ein schlauchförmiges Flächengebilde, insbesondere ein schlauchförmiges Rundgewebe, oder ein zu einem Schlauch verbundenes Flachgewebe herangezogen, wobei Abschnitte des Gewebes zumindest eines offenen Endes durch Falten zu einem Sackboden ausgeformt werden. Zum Transport von losem Material werden zumeist Säcke herangezogen, die beidseitig durch einen an den offenen Enden des schlauchförmigen Gewebes ausgeformten Sackboden verschlossen sind. Je nach Ausführungsform der Sackböden werden dabei entweder kissenförmige oder kastenförmige Säcke gebildet. Zum Befüllen von zweiseitig verschlossenen Säcken mit Kastenform haben sich durch Ventilzettel gebildete Ventile bewährt, da sich so ein Ventil nach dem Befüllen des Sacks automatisch verschließt. Der Ventilzettel wird beim Falten des Sackbodens in den Sackboden eingebracht. Zur Verstärkung der Sackböden weisen die Säcke pro Sackboden zusätzlich ein Deckblatt auf, das flächig an den Sackböden aufgebracht ist. Zweiseitig verschlossene Säcke in Kastenform mit Ventil - auch Kastenventilsäcke genannt - und deren Herstellung sind zum Beispiel aus der Patentschrift EP 0 758 992 B1 bekannt.

Um sich Zugang zum Inhalt eines oben beschriebenen Sacks zu verschaffen muss dieser mit einem Messer oder einem ähnlichen spitzen Werkzeug, wie zum Beispiel einer Schere, geöffnet werden. Da aber Messer oder ähnliche Werkzeuge zum Öffnen des Sacks nicht immer zur Hand sind, werden oft andere Gegenstände zweckentfremdet, um den Sack zu öffnen. Dabei kann es aber schnell zu Verletzungen kommen, da das Gewebe der Säcke zur Verhinderung von Rissen und Austritt von losem Material sehr hohen Belastungen standhalten kann.

Es ist die Aufgabe der vorliegenden Erfindung einen Sack bereitzustellen, der einfach aufgebaut ist und ohne zusätzliches Werkzeug geöffnet werden kann. Ferner ist es die Aufgabe der vorliegenden Erfindung, ein Verfahren und eine Vorrichtung zur Herstellung so eines Sacks bereitzustellen.

Erfindungsgemäß wird die vorliegende Aufgabe durch einen Sack mit den Merkmalen des kennzeichnenden Teils des Anspruchs 1, durch ein Verfahren mit den Merkmalen des kennzeichnenden Teils des Anspruchs 13 und durch eine Vorrichtung mit den Merkmalen des kennzeichnenden Teils des Anspruchs 17 gelöst. Bevorzugte Ausgestaltungen der Erfindung sind Gegenstand der abhängigen Ansprüche.

Der erfindungsgemäße Sack ist aus einem Schlauchmaterial gebildet, welches ein schlauchförmiges Flächengebilde oder ein zu einem Schlauch verbundenes Flachmaterial ist, durch ein Gewebe, ein Nonwoven, eine Folie oder Papier gebildet ist und ein erstes und ein zweites offenes Ende aufweist, die einander gegenüberliegen. Vorteilhaft ist bei einem durch Gewebe gebildeten Schlauchmaterial das Gewebe aus verwobenen Kunststoffbändchen, wie Polyolefin- oder Polyesterbändchen, etc., und/oder Naturfasern, wie Jute, etc. gebildet. Vorteilhaft kann das Schlauchmaterial geschweißt werden.

Abschnitte des Schlauchmaterials mindestens eines der offenen Enden sind durch Falten zu einem Sackboden ausgeformt, wobei der Sack je Sackboden ein erstes Deckblatt aufweist, welches zur Verstärkung des Sackbodens ausgebildet ist. Das erste Deckblatt ist mit dem Sackboden verbunden und erstreckt sich in einem ersten Bereich des Sackbodens. Das erste Deckblatt kann beispielsweise durch ein flaches Blättchen aus Kunststoff oder Papier, Nonwoven, eine Folie oder aus einem Gewebe aus Kunststoff und/oder Naturfaser gebildet sein.

Erfindungsgemäß weist der Sackboden ein zweites Deckblatt auf, wobei sich das zweite Deckblatt in einem zweiten Bereich des Sackbodens erstreckt und so mit dem Sackboden verbunden ist, dass es vom Sackboden gelöst werden kann. Durch die Deckblätter halten die gefalteten Abschnitte des Schlauchmaterials so zusammen, dass der Sackboden verschlossen ist. Das zweite Deckblatt kann beispielsweise durch ein flaches Blättchen aus Kunststoff oder Papier, eine Folie, Nonwoven oder auch wiederum aus einem Gewebe aus Kunststoff und/oder Naturfaser gebildet sein.

Das Dokument EP 2 857 322 A1 offenbart einen Sack mit einem Deckblatt, welches mit Perforationen versehen ist, damit Teile aus dem Deckblatt gelöst werden können, um den Sack zu öffnen. In einer Ausgestaltung dieses Sacks ist ein Schutzband vorgesehen, das nur zum Schutz vor unbeabsichtigtem Aufreißen des Deckblatts an der Aufreißlinie dient. Das Schutzband ist mit dem Deckblatt lösbar verbunden.

Das Dokument DE 39 41 300 A1 offenbart einen Sack, bei welchem ein Sackboden mit einem Deckblatt verschlossen ist. Das Deckblatt ist in einem Abschnitt fest mit dem Sackboden verbunden und in einem anderen Abschnitt lösbar mit dem Sackboden verbunden. Zum Öffnen des Sacks wird das Deckblatt in dem Bereich, in dem es lösbar mit dem Sackboden verbunden ist, abgezogen, wodurch der Sack geöffnet wird. Um ein Einreißen oder Aufreißen der Laschen zu vermeiden, weist das Deckblatt Vorreißlinien auf.

Vorteilhaft wird die Verbindung zwischen dem zweiten Deckblatt und dem Sackboden durch Verschweißen oder Verkleben des zweiten Deckblatts mit dem Schlauchmaterial des Sackbodens erreicht, wobei dabei die Haftung des Klebers oder der Verschweißung so gewählt werden muss, dass das zweite Deckblatt von dem Sackboden lösbar ist, aber dennoch ausreichend auf dem Schlauchmaterial hält, um ein nicht gewolltes und irrtümliches Lösen zu verhindern.

Vorteilhaft wird auch das erste Deckblatt mit dem Sackboden verklebt oder verschweißt, wobei die Haftung des Klebers oder der Schweißung so groß sein muss, dass ein Lösen des ersten Deckblatts zuverlässig verhindert wird.

Zweckmäßig unterscheidet sich ein Material des zweiten Deckblatts von einem Material des ersten Deckblatts und/oder vom Schlauchmaterial des Sacks. Das hat den Vorteil, dass trotz des Einsatzes eines gleichen Klebstoffs oder Schweißverfahrens zum Verbinden des ersten Deckblatts mit dem Schlauchmaterial des Sacks und des zweiten Deckblatts mit dem Schlauchmaterial des Sacks, das zweite Deckblatt lösbar ist und das erste Deckblatt nicht vom Schlauchmaterial des Sacks lösbar ist. Es besteht aber auch die Möglichkeit, dass das erste Deckblatt, das zweite Deckblatt und das Schlauchmaterial des Sacks aus demselben Material gebildet sind.

Bei dem erfindungsgemäßen Sack hält der Sackboden nur durch die auf dem Sackboden aufgebrachten Deckblätter zusammen. Um den Sack zur Entnahme von Material zu öffnen wird erfindungsgemäß das zweite Deckblatt von dem Sackboden gelöst, wodurch in dem zweiten Bereich eine Öffnung im Sackboden auseinanderziehbar ist und somit Material aus dem Sack entnommen werden kann. Zum Auseinanderziehen der Öffnung reicht im Regelfall das Ablösen des zweiten Deckblatts aus. In Abhängigkeit vom Schlauchmaterial und des verwendeten Klebstoffes bzw. Schweißverfahrens, kann es aber vorkommen, dass die Öffnung beim Ablösen des zweiten Deckblatts nicht auseinandergezogen wird und die Abschnitte des Sacks teilweise noch zusammenhaften. Zum Lösen dieser Haftung zwischen den Abschnitten ist es aber ausreichend, den Sack so zu drehen, dass das lose Material schwerkraftbedingt gegen die Abschnitte drückt und die Haftung zwischen den Abschnitten vor einem Ausströmen von losem Material aus dem Sack durch das lose Material aufgebrochen wird. Der erste Bereich des Sackbodens bleibt unverändert durch das erste Deckblatt zusammengehalten.

Bei dem erfindungsgemäßen Sack ist infolgedessen zum Entnehmen des Inhaltsmaterials aus dem Sack kein spitzer Gegenstand, wie ein Messer oder ähnliche Werkzeuge, notwendig. Ferner ist durch die erfindungsgemäße Ausbildung des Sacks der Vorteil erhalten, dass eine Größe der Öffnung durch eine Variation der Größe des ersten und des zweiten Bereichs bzw. des ersten und zweiten Deckblatts veränderbar ist. So wird zum Beispiel bei einem Sack zum Fassen von größerem losen Material, wie Walnüssen oder Steinen, die Größe bzw.

Ausdehnung des zweiten Deckblatts größer gewählt als bei einem Sack zum Fassen von Kaffeebohnen oder Kies. Somit kann eine optimale Größe der Öffnung in Abhängigkeit des losen Materials vorgegeben werden und loses Material dosiert aus dem Sack abgegeben werden.

Bevorzugt weisen die zum Sackboden gefalteten Abschnitte des Schlauchmaterials zumindest zwei Laschen auf, die einander zumindest abschnittsweise überlappen, aneinander anliegen und durch das erste und zweite Deckblatt in Position gehalten sind. Vorteilhaft sind die Laschen des Sackbodens nicht oder im Wesentlichen nicht untereinander verbunden. Im Wesentlichen bedeutet in diesem Zusammenhang, dass die Abschnitte zum leichteren Falten des Sackbodens mittels beispielsweise Klebstoffpunkten aneinandergehaftet werden können. Bei Entfernen des zweiten Deckblatts sind die Laschen im zweiten Bereich zu einer Öffnung auseinanderziehbar, wodurch das lose Material aus dem Sack abführbar ist. Ein Sackboden mit zwei Laschen, die einander zumindest abschnittsweise überlappen ist, zum Beispiel bei einem Kreuzboden als Sackboden gegeben. Hierdurch ist der Vorteil erhalten, dass ein sehr stabiler Sack mit großem Volumen gebildet werden kann und dieser dennoch erfindungsgemäß sehr einfach und schnell ohne Messer oder Werkzeug geöffnet werden kann. Vorteilhaft sind bei einem Kreuzboden als Sackboden das erste und das zweite Deckblatt im Wesentlichen rechteckig ausgebildet.

Zweckmäßig ist nach dem Entfernen des zweiten Deckblatts der durch das erste Deckblatt verstärkte Bereich des Sackbodens als Haltegriff zum Halten des Sacks ausgebildet, indem der Bereich zwischen den Laschen für den Zugriff zugänglich ist. Das hat den Vorteil, dass der Sack sehr einfach ohne das Vorsehen von zusätzlichen Henkeln oder ähnlichen Elementen handhabbar ist und eine Dosierung beim Abgeben von losem Material aus dem Sack besser kontrollierbar ist. Vorteilhaft wird zum Abgeben von losen Material aus einem Kastensack, bei dem beide offenen Enden zu einem Sackboden gefaltet sind, der Sack am durch das erste Deckblatt gebildeten Haltegriff mit einer Hand gegriffen und mit der anderen Hand umschlungen gehalten.

Vorteilhaft überlappen sich der erste Bereich und der zweite Bereich des Sackbodens, wobei das zweite Deckblatt das erste Deckblatt insbesondere lose überlagert. Hierdurch ist der Vorteil erhalten, dass ein Austritt von Material durch Spalten oder Ritzen zwischen den Deckblättern zuverlässig verhindert wird.

Bei einem durch einen Kreuzboden gebildeten Sackboden ist eine Bodenfläche des Sackbodens durch das Falten im Wesentlichen durch die Laschen gebildet und durch zwei Dreiecksbereiche, die jeweils längsseitig an der Bodenfläche gegenüberliegend ausgebildet sind und im Wesentlichen die Form eines Dreiecks aufweisen. Versuche haben bei mit Kreuzböden gebildeten Sackböden gezeigt, dass sich das zweite Deckblatt in einem Dreiecksbereich der Bodenfläche leichter ablösen lässt als im Bereich der Laschen der Bodenfläche. Wird das zweite Deckblatt im Dreiecksbereich beginnend in Längsrichtung der Bodenfläche von dem Sackboden abgelöst, kann das zweite Deckblatt zwar im Dreiecksbereich sehr leicht abgelöst werden, aber es kommt durch die bessere Haftung des zweiten Deckblatts an dem Sackboden im Bereich der Laschen beim Übergang zwischen Dreiecksbereich und dem Bereich der Laschen der Bodenfläche zu einem Ausfransen oder Ausreißen bzw. Abreißen von Kanten der Laschen. Dies kann eine Kontamination des losen Materials zur Folge haben, die nicht gewünscht ist. Bevorzugt wird das zweite Deckblatt vom überlagerten Bereich der Deckblätter beginnend in Längsrichtung der Bodenfläche von dem Sackboden abgelöst. Hierbei wird zwar zu Beginn des Ablösens eine höhere Kraft benötigt, es wird aber ein Ausfransen oder Ausreißen bzw. Abreißen der Kanten im Übergang zwischen Dreiecksbereich und dem Bereich der Laschen der Bodenfläche zuverlässig verhindert, da die Kraft gleichmäßiger über eine Breite des Sackbodens verteilt wird. Dadurch, dass die Kanten nicht mehr ausfransen oder ausreißen bzw. abreißen wird auch eine Kontamination des losen Materials bei seiner Entnahme aus dem Sack verhindert.

Vorteilhaft ist ein das erste Deckblatt überlagernder Bereich des zweiten Deckblatts als Halteelement zum Entfernen des zweiten Deckblatts ausgebildet. Hierdurch wird die Handhabung des Sacks noch weiter vereinfacht.

Bevorzugt unterscheidet sich bei dem erfindungsgemäßen Sack eine Grammatur des zweiten Deckblatts von einer Grammatur des Schlauchmaterials und/oder des ersten Deckblatts. Im Speziellen ist vorteilhaft die Grammatur des zweiten Deckblatts höher als eine Grammatur des Schlauchmaterials und/oder des ersten Deckblatts. Durch die höhere Grammatur weist das zweite Deckblatt eine höhere Steifigkeit auf als das Schlauchmaterial und/oder das erste Deckblatt.

Zweckmäßig unterscheidet sich bei einem ersten Deckblatt und/oder zweiten Deckblatt und/oder Schlauchmaterial aus einem Gewebe eine Bändchendichte des Gewebes des zweiten Deckblatts von der Bändchendichte des Gewebes des Schlauchmaterials des Sacks und/oder des ersten Deckblatts. Im Speziellen ist vorteilhaft die Bändchendichte des Gewebes des zweiten Deckblatts höher als eine Bändchendichte des Gewebes des Schlauchmaterials des Sacks und/oder des ersten Deckblatts. Durch die höhere Bändchendichte wird die Steifigkeit des zweiten Deckblatts erhöht.

Durch die höhere Steifigkeit des zweiten Deckblatts wird während des Ablösens des zweiten Deckblatts eine auf das Schlauchmaterial des Sacks wirkende Kraft besser über die Breite des Sackbodens verteilt. Das hat zur Folge, dass beim Ablösen des zweiten Deckblatts eine auf jeden Abschnitt des Sackbodens wirkende Kraft verringert wird und dass das zweite Deckblatt leichter und gleichmäßiger von dem Sackboden ablösbar/abziehbar ist. Dies ist insbesondere bei einem durch ein Gewebe gebildeten Schlauchmaterial vorteilhaft, da es bei zu hohen auf Abschnitte des Sackbodens wirkenden Kräften zum Ausziehen von Bändchen aus dem Sackboden kommen kann. Durch eine auf die Bändchen wirkende geringe Kraft wird ein Herausreißen von einzelnen Bändchen und ein Ausfransen von Kanten der Laschen beim Ablösen des zweiten Deckblatts von dem Gewebe zuverlässig verhindert.

Das erfindungsgemäße Verfahren zur Herstellung eines erfindungsgemäßen Sacks für loses Material umfasst die folgenden Schritte:
- Falten von Abschnitten zumindest eines offenen Endes des Schlauchmaterials zu einem Sackboden;
- Aufbringen eines ersten Deckblattes auf einen ersten Bereich des Sackbodens zur Verstärkung des Sackbodens; und
- Aufbringen eines zweiten Deckblattes in einen zweiten Bereich des Sackbodens, wobei die Deckblätter die gefalteten Abschnitte des Schlauchmaterials so zusammenhalten, dass der Sackboden verschlossen ist.

Mittels des erfindungsgemäßen Verfahrens ist ein erfindungsgemäßer Sack mit den eingangs erwähnten Merkmalen herstellbar. Das Verfahren kann entweder per Hand, oder automatisch mittels der erfindungsgemäßen Vorrichtung durchgeführt werden.

Die erfindungsgemäße Vorrichtung zur Herstellung eines erfindungsgemäßen Sacks aus einem Schlauchmaterial gebildet durch ein schlauchförmiges Flächengebilde oder ein zu einem Schlauch verbundenes Flachmaterial umfasst eine Fördereinrichtung zum Transport des Schlauchmaterials in Förderrichtung, wobei das Schlauchmaterial des Sacks mit den offenen Enden quer zu der Förderrichtung flächig auf der Fördereinrichtung aufliegt, zumindest eine Bodenfalteinheit, die zum Falten zumindest eines Endes des Schlauchmaterials zu einem Sackboden ausgebildet ist, eine erste Deckblattaufbringeinheit, die ausgebildet ist das erste Deckblatt in den ersten Bereich des Sackbodens aufzubringen, und eine zweite Deckblattaufbringeinheit, die ausgebildet ist das zweite Deckblatt in den zweiten Bereich des Sackbodens aufzubringen.

Mittels der erfindungsgemäßen Vorrichtung ist ein erfindungsgemäßer Sack mit den eingangs erwähnten Merkmalen herstellbar. Die Bodenfalteinheit ist vorteilhaft durch eine Auseinanderzieheinheit und eine Zusammenfalteinheit gebildet, die als Einheit ausgeführt sein können, aber auch getrennt zueinander ausgeführt sein können. Ein technischer Aufbau von der Auseinanderzieheinheit, der Zusammenfalteinheit und der Deckblattaufbringeinheit wird hier nicht näher ausgeführt, da dieser allgemein bekannt ist. Siehe zum Beispiel EP 2 441 574 B1 und EP 2 711 164 B1.

Weitere vorteilhafte Ausführungsvarianten des erfindungsgemäßen Sacks und der erfindungsgemäßen Vorrichtung werden in weiterer Folge anhand der Figuren näher erläutert.
Figur 1 zeigt eine erste Ausführungsvariante einer Vorrichtung zum Herstellen einer Ausführungsvariante eines erfindungsgemäßen Sacks in einer schematischen Darstellung.
Figuren 2 bis 5 zeigen den erfindungsgemäßen Sack, der mit der Vorrichtung gemäß Figur 1 hergestellt wurde, in verschiedenen schematischen Darstellungen.
Figur 6 zeigt eine weitere Ausführungsvariante einer Vorrichtung zum Herstellen einer Ausführungsvariante eines erfindungsgemäßen Sacks in einer schematischen Darstellung.
Figuren 7 und 8 zeigen jeweils einen erfindungsgemäßen Sack gemäß Figur 2 in einer schematischen Ansicht von oben mit unterschiedlich geformten zweiten Deckblättern.

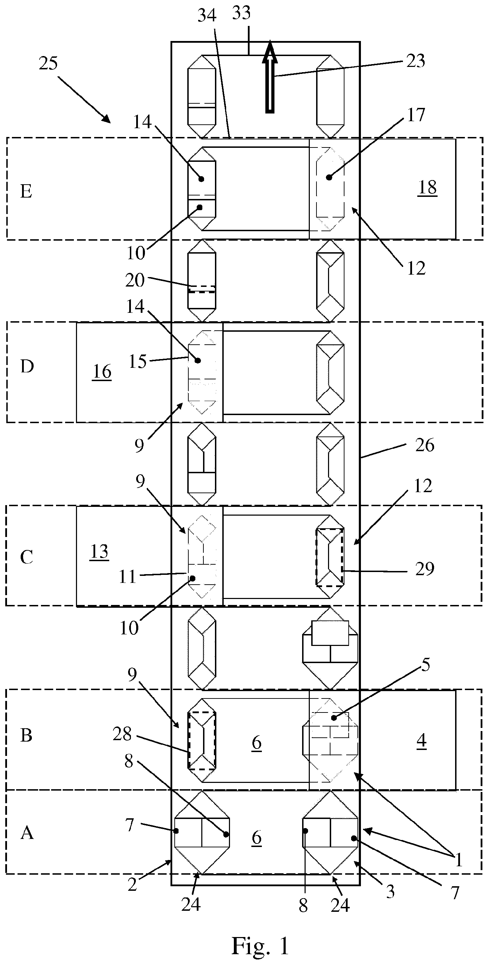

Figur 1 zeigt eine erste Ausführungsvariante einer Vorrichtung 25 zum Herstellen einer Ausführungsvariante eines erfindungsgemäßen Sacks 1 in einer schematischen Darstellung. Ferner zeigt Figur 1 einzelne Schritte A bis E, die durch die Vorrichtung 25 zur Herstellung des erfindungsgemäßen Sacks 1 ausgeführt werden. Die Schritte A bis E werden an jedem Sack 1 durchgeführt.

Die Vorrichtung 25 umfasst eine Fördereinrichtung 26 zum Transport der Säcke 1 in Förderrichtung 23, eine nicht dargestellte Bodenfalteinheit, eine Ventilzettelaufbringeinheit 4, eine erste Deckblattaufbringeinheit 13, eine zweite Deckblattaufbringeinheit 16 und eine dritte Deckblattaufbringeinheit 18.

In Figur 1 sind neun Säcke 1 in verschiedenen Produktionsstadien dargestellt, wobei die Säcke 1 durch die Fördereinrichtung 26 von Schritt zu Schritt gefördert werden. Jeder Sack 1 ist aus einem Schlauchmaterial gebildet, welches ein schlauchförmiges Flächengebilde in Form eines Rundgewebes 6 ist, wobei das Rundgewebe 6 ein erstes offenes Ende 2 und ein zweites offenes Ende 3 aufweist. So ein schlauchförmiges Rundgewebe 6 wird beispielsweise in Rundwebmaschinen hergestellt. Es besteht aber auch die Möglichkeit, dass der Sack 1 durch ein zu einem Schlauch verbundenes Flachgewebe gebildet ist. Vorteilhaft ist dabei das Flachgewebe zu einem Schlauch verschweißt, geklebt oder vernäht. Das Rundgewebe 6 - in weiterer Folge als Gewebe 6 bezeichnet - liegt mit den offenen Enden 2 und 3 quer zu der Förderrichtung 23 auf der Fördereinrichtung 26 flächig auf. Es besteht aber auch die Möglichkeit, dass das Schlauchmaterial durch Papier, Nonwoven oder Folie gebildet ist.

Zur Herstellung des erfindungsgemäßen Sacks 1 werden folgende Schritte A bis E durchgeführt:
A: Auseinanderziehen des ersten offenen Endes 2 und des zweiten offenen Endes 3 und Umfalten von Abschnitten 24 des Gewebes 6 unter Bildung von Laschen 7 und 8 durch die Bodenfalteinheit;
B: Einlegen eines Ventilzettels 5 in das zweite offene Ende 3 und verschweißen oder verkleben des Ventilzettels 5 mit dem Gewebe 6 des Sacks 1 durch die Ventilzettelaufbringeinheit 4 und Zusammenfalten der Laschen 7 und 8 des ersten offenen Endes 2 zu einem als Kreuzboden ausgebildeten ersten Sackboden 9 durch die Bodenfalteinheit, wobei die zwei Laschen 7 und 8 abschnittsweise überlappen und aneinander anliegen und wobei eine erste Bodenfläche 28 gebildet wird;
C: Aufbringen eines ersten Deckblatts 10 in einen ersten Bereich 11 des ersten Sackbodens 9 durch die erste Deckblattaufbringeinheit 13, wobei das erste Deckblatt 10 vorteilhaft mit dem Gewebe 6 des ersten Sackbodens 9 durch die erste Deckblattaufbringeinheit 13 unlösbar verklebt oder verschweißt wird, und Zusammenfalten der Laschen 7 und 8 des zweiten offenen Endes 3 zu einem als Kreuzboden ausgebildeten zweiten Sackboden 12 durch die Bodenfalteinheit, wobei die zwei Laschen 7 und 8 abschnittsweise überlappen und aneinander anliegen und wobei eine zweite Bodenfläche 29 gebildet wird;
D: Aufbringen eines zweiten Deckblatts 14 in einen zweiten Bereich 15 des ersten Sackbodens 9 durch die zweite Deckblattaufbringeinheit 16, wobei sich der erste Bereich 11 und der zweite Bereich 15 überlappen und das zweite Deckblatt 14 das erste Deckblatt 10 unter Bildung eines überlagernden Bereichs 20 zumindest abschnittsweise lose überlagert und wobei das zweite Deckblatt 14 mit dem Gewebe 6 des ersten Sackbodens 9 durch die zweite Deckblattaufbringeinheit 16 so verklebt oder verschweißt wird, dass es sich unter Aufbringung einer entsprechenden Kraft wieder lösen lässt; und
E: Aufbringen eines dritten Deckblatts 17 auf den zweiten Sackboden 12 durch die dritte Deckblattaufbringeinheit 18, wobei das dritte Deckblatt 17 vorteilhaft mit dem zweiten Sackboden 12 durch die dritte Deckblattaufbringeinheit 18 unlösbar verklebt oder verschweißt wird.

Es sei hier noch darauf hingewiesen, dass die Bodenfalteinheit aus zwei Auseinanderzieheinheiten und zwei Zusammenfalteinheiten gebildet ist, wobei der Einfachheit halber die Bodenfalteinheit in obiger Erklärung der einzelnen Schritte als eine Einheit betrachtet wird. Eine Auseinanderzieheinheit beispielsweise aus EP 2 711 164 B1 bekannt. Die Zusammenfalteinheit ist beispielsweise durch einfache Winkel gebildet, die beim Transport des Sacks 1 auf der Fördereinrichtung 26 die Laschen 7 und 8 zusammenfalten.

In einer weiteren Ausführungsvariante besteht auch die Möglichkeit, dass die oben angeführten Schritte per Hand ausgeführt werden.

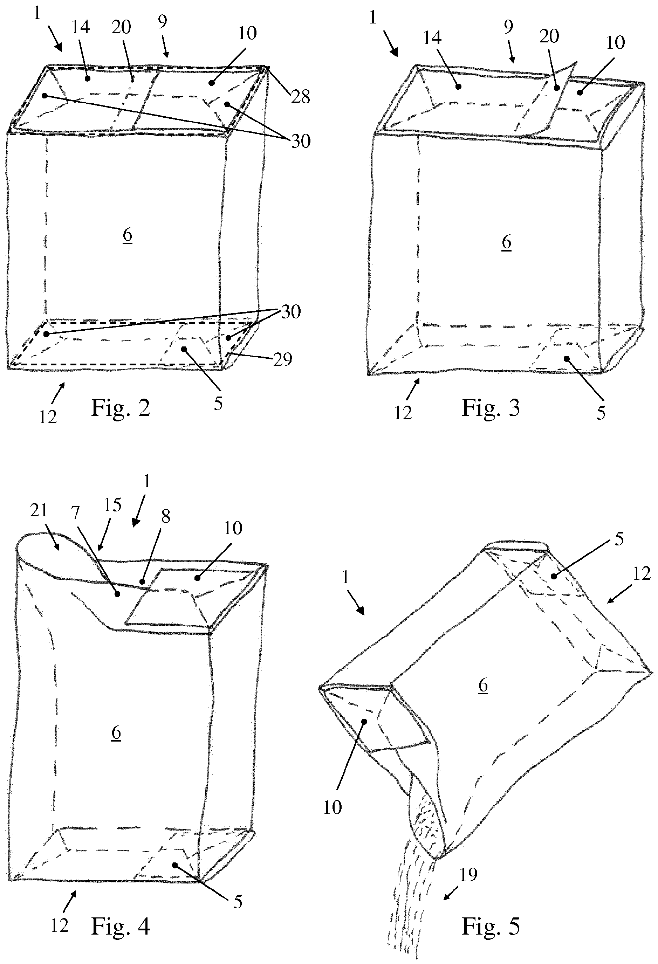

Figuren 2 bis 5 zeigen den erfindungsgemäßen Sack 1, der mit der Vorrichtung 25 gemäß Figur 1 hergestellt wurde, in verschiedenen Darstellungen, wobei der Sack 1 bereits über den Ventilzettel 5 mit einem losen Material 19 befüllt wurde. Wie aus Figur 1 gut erkennbar ist, sind die Bodenflächen 28 und 29 jeweils durch die einander überlappenden Laschen 7 und 8 und durch zwei Dreiecksbereiche 30 gebildet, die jeweils längsseitig an der Bodenflächen 28 und 29 gegenüberliegend ausgebildet sind und im Wesentlichen die Form eines Dreiecks aufweisen.

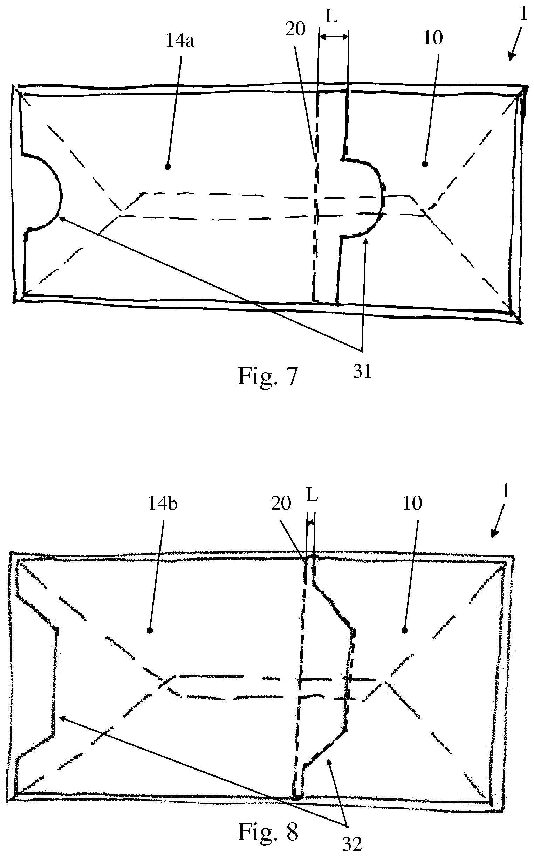

In weiterer Folge wird nun ein Öffnen des Sacks 1 und ein Entnehmen von losem Material 19 aus dem Sack 1 näher beschrieben. In einem ersten Schritt wird der das erste Deckblatt 10 zumindest abschnittsweise lose überlagernder Bereich 20 des zweiten Deckblatts 14 aufgebogen, wodurch der überlagernde Bereich 20 ein Halteelement ausbildet, das leicht greifbar ist und über welches das zweite Deckblatt 14 vom Gewebe 6 durch Schälbeanspruchung abgelöst werden kann. Zumindest abschnittweise lose bedeutet in diesem Zusammenhang, dass das zweite Deckblatt 14 mit dem ersten Deckblatt 10 auch abschnittsweise verklebt oder verschweißt sein kann, vorteilhaft liegt das zweite Deckblatt 14 aber komplett lose auf dem ersten Deckblatt 10 auf. Siehe dazu Figuren 2 und 3. Der überlagernde Bereich 20 kann optional einen Konturenschnitt 31 oder 32 aufweisen, wodurch der überlagernde Bereich 20 besonders ergonomisch ausgestaltet ist und somit noch einfacher greifbar ist. Siehe dazu Figuren 7 und 8.

Durch das Ablösen des zweiten Deckblatts 14 werden die Laschen 7 und 8 im zweiten Bereich 15 zu einer Öffnung 21 auseinandergezogen. Nunmehr kann der Sack 1 durch Greifen in den Bereich zwischen den Laschen 7 und 8 und Halten des ersten Deckblatts 10 so positioniert werden, dass das lose Material 19 aus dem Sack 1 durch die Öffnung 21 abgeführt werden kann. Je nach Haftung des zweiten Deckblatts 14 an den Laschen 7 und 8 und je nach Elastizität des Materials besteht die Möglichkeit, dass beim Lösen des zweiten Deckblatts 14 nicht automatisch gleich die Öffnung 21 mit auseinandergezogen wird. In diesem Fall wird die Öffnung 21 erst durch ein zum Entnehmen von losen Material 19 aus dem Sack 1 nötiges Umlagern des Sacks 1 schwerkraftbedingt durch das lose Material 19 selbst auseinandergezogen.

Ein Aufschneiden des Sacks 1 zum Entnehmen von losem Material 19 ist bei dem erfindungsgemäßen Sack 1 nicht notwendig.

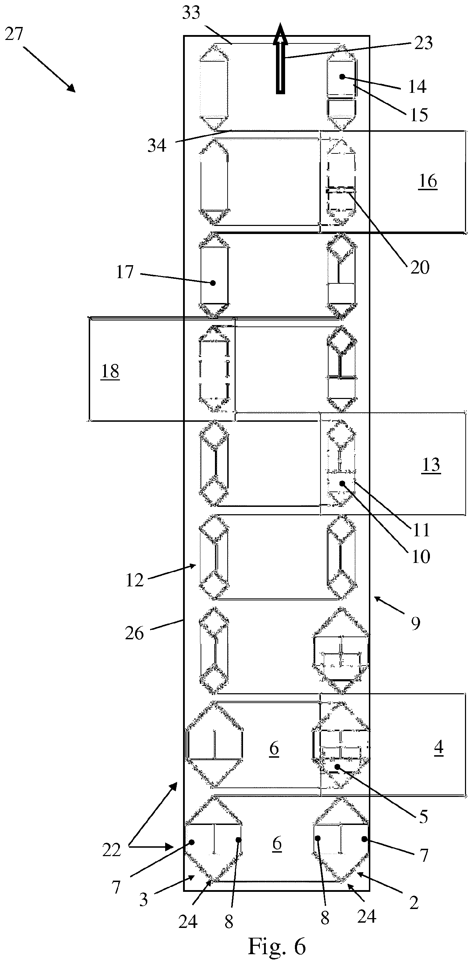

Figur 6 zeigt eine weitere Ausführungsvariante einer Vorrichtung 27 zum Herstellen einer Ausführungsvariante eines erfindungsgemäßen Sacks 22 in einer schematischen Darstellung. Elemente und Teile der Vorrichtung 27, die gleich oder ähnlich sind wie Elemente und Teile der Vorrichtung 25 gemäß Figur 1, sind mit gleichen Bezugszeichen versehen. Elemente, Teile und Bereiche des Sacks 22, die gleich oder ähnlich sind wie Elemente, Teile und Bereiche des Sacks 1 gemäß den Figuren 1 bis 5, sind mit gleichen Bezugszeichen versehen.

Der erfindungsgemäße Sack 22 unterscheidet sich zu dem erfindungsgemäßen Sack 1 nur dadurch, dass beim erfindungsgemäßen Sack 22 der Ventilzettel 5 im ersten Sackboden 9 eingebracht wird. Ferner unterscheidet sich die Herstellung des Sacks 22 von der Herstellung des Sacks 1 insofern, dass bei der Herstellung des Sacks 22 das dritte Deckblatt 17 auf den zweiten Sackboden 12 aufgebracht wird, bevor das zweite Deckblatt 14 auf den ersten Sackboden 9 aufgebracht wird. Infolgedessen ist bei der Vorrichtung 27 die dritte Deckblattaufbringeinheit 18 in Förderrichtung 23 vor der zweiten Deckblattaufbringeinheit 16 angeordnet.

Es sei hier noch darauf hingewiesen, dass die Bearbeitung des ersten und des zweiten Sackbodens 9 und 12 auch in einer anderen Reihenfolge erfolgen kann, wobei das erste Deckblatt 10 vor dem zweiten Deckblatt 14 zur Realisierung eines überlagernden Bereichs 24 aufgebracht werden muss. Es besteht diesbezüglich beispielswiese auch die Möglichkeit, dass das erste Deckblatt 10 und das dritte Deckblatt 17, oder das zweite Deckblatt 14 und das dritte Deckblatt 17 gleichzeitig auf die jeweiligen Sackböden 9 und 12 aufgebracht werden. Auch besteht die Möglichkeit, dass die Laschen 7 und 8 der jeweiligen Enden 2 und 3 gleichzeitig zur Bildung des jeweiligen Sackbodens 9 oder 12 zusammengefaltet werden. Darüber hinaus besteht die Möglichkeit, dass die Bildung des ersten Sackbodens 9 und des zweiten Sackbodens 12 jeweils komplett separat erfolgt.

Figuren 7 und 8 zeigen einen erfindungsgemäßen Sack 1 gemäß Figur 2 in schematischer Ansicht von oben mit unterschiedlich ausgeformten zweiten Deckblättern 14a und 14b des Sacks 1. Das zweite Deckblatt 14a weist an zwei Enden einen runden Konturschnitt 31 auf, wobei dadurch der überlagernde Bereich 20 verlängert wird und dieser somit besser greifbar ist. Das zweite Deckblatt 14b weist statt einem runden Konturschnitt 31 einen trapezförmigen Konturschnitt 32 auf. Vorteilhaft wird eine Länge L des überlagernde Bereich 20 so gewählt, dass der überlagernde Bereich 20 gut greifbar ist. Entsprechend kann die Länge L je nach Konturschnitt 31 oder 32 unterschiedlich gewählt werden.

Es sei auch noch darauf hingewiesen, dass eine Position des ersten Bereichs 11 und des zweiten Bereichs 12 bei der Herstellung des Sacks 1 oder des Sacks 22 auch vertauscht sein kann, wodurch das erste Deckblatt 10 näher zu einer in Förderrichtung 23 vorne liegenden Kante 33 des Sacks 1, 22 und das zweite Deckblatt 14 näher zu einer in Förderrichtung 23 hinten liegenden Kante 34 des Sacks 1, 22 aufgebracht wird.

## Patentansprüche

1. Sack (1; 22) für loses Material (19), wobei der Sack (1; 22) aus einem Schlauchmaterial (6) gebildet ist, welches Schlauchmaterial (6) ein schlauchförmiges Flächengebilde oder ein zu einem Schlauch verbundenes Flachmaterial ist, durch ein Gewebe, ein Nonwoven, eine Folie oder Papier gebildet ist und ein erstes offenes Ende (2) und ein zweites offenes Ende (3) aufweist, die einander gegenüber liegen, wobei Abschnitte (24) des Schlauchmaterials (6) mindestens eines der offenen Enden (2, 3) durch Falten zu einem Sackboden (9, 12) ausgeformt sind, wobei der Sackboden (9) ein erstes Deckblatt (10) aufweist, welches zur Verstärkung des Sackbodens (9) ausgebildet ist, wobei der Sackboden (9) ein zweites Deckblatt (14, 14a, 14b) aufweist, wobei das erste Deckblatt (10) mit dem Sackboden (9) verbunden ist und sich in einem ersten Bereich (11) des Sackbodens (9) erstreckt und **dadurch gekennzeichnet, dass** das zweite Deckblatt (14, 14a, 14b) mit dem Sackboden (9) lösbar verbunden ist und sich in einem zweiten Bereich (15) des Sackbodens (9) erstreckt, wobei durch die Deckblätter (10, 14, 14a, 14b) die gefalteten Abschnitte (24) des Schlauchmaterials (6) so zusammenhalten, dass der Sackboden (9) verschlossen ist.

2. Sack (1; 22) nach Anspruch 1, **dadurch gekennzeichnet, dass** die zum Sackboden (9) gefalteten Abschnitte (24) des Schlauchmaterials (6) zumindest zwei Laschen (7, 8) aufweisen, die einander zumindest abschnittsweise überlappen, aneinander anliegen und durch das erste und zweite Deckblatt (10, 14, 14a, 14b) in Position gehalten sind, wobei bei Entfernen des zweiten Deckblatts (14, 14a, 14b) die Laschen (7, 8) im zweiten Bereich (15) zu einer Öffnung (21) auseinanderziehbar sind, wodurch das lose Material (19) aus dem Sack (1; 22) abführbar ist.

3. Sack (1; 22) nach Anspruch 2, **dadurch gekennzeichnet, dass** nach dem Entfernen des zweiten Deckblatts (14, 14a, 14b) der durch das erste Deckblatt (10) verstärkte erste Bereich (11) des Sackbodens (9) als Haltegriff zum Halten des Sacks (1; 22) ausgebildet ist, indem der erste Bereich (11) zwischen den Laschen (7, 8) für den Zugriff zugänglich ist.

4. Sack (1; 22) nach einem der vorherigen Ansprüche, **dadurch gekennzeichnet, dass** sich der erste Bereich (11) und der zweite Bereich (15) des Sackbodens (9) überlappen, wobei das zweite Deckblatt (14, 14a, 14b) das erste Deckblatt (10) überlagert.

5. Sack (1; 22) nach Anspruch 4, **dadurch gekennzeichnet, dass** ein das erste Deckblatt (10) überlagernder Bereich (20) des zweiten Deckblatts (14, 14a, 14b) als Halteelement zum Entfernen des zweiten Deckblatts (14) ausgebildet ist.

6. Sack (1; 22) nach einem der vorherigen Ansprüche, **dadurch gekennzeichnet, dass** sich ein Material des zweiten Deckblatts (14, 14a, 14b) von einem Material des ersten Deckblatts (10) und/oder vom Schlauchmaterial (6) des Sacks (1; 22) unterscheidet.

7. Sack (1; 22) nach einem der vorherigen Ansprüche, **dadurch gekennzeichnet, dass** sich eine Grammatur des zweiten Deckblatts (14, 14a, 14b) von einer Grammatur des Schlauchmaterials (6) und/oder des ersten Deckblatts (10) unterscheidet.

8. Sack (1; 22) nach einem der vorherigen Ansprüche, **dadurch gekennzeichnet, dass** eine Grammatur des zweiten Deckblatts (14, 14a, 14b) höher ist als eine Grammatur des Schlauchmaterials (6) und/oder des ersten Deckblatts (10).

9. Sack (1; 22) nach einem der vorherigen Ansprüche, **dadurch gekennzeichnet, dass** das erste Deckblatt (10) und/oder das zweite Deckblatt (14, 14a, 14b) und/oder das Schlauchmaterial (6) durch ein Gewebe gebildet ist/sind, wobei sich eine Bändchendichte des Gewebes des zweiten Deckblatts (14, 14a, 14b) von der Bändchendichte des Gewebes des Sacks (1; 22) und/oder des ersten Deckblatts (10) unterscheidet.

10. Sack (1; 22) nach einem der vorherigen Ansprüche, **dadurch gekennzeichnet, dass** das erste Deckblatt (10) und/oder das zweite Deckblatt (14, 14a, 14b) und/oder das Schlauchmaterial (6) durch ein Gewebe gebildet ist/sind, wobei eine Bändchendichte des Gewebes des zweiten Deckblatts (14, 14a, 14b) höher ist als eine Bändchendichte des Gewebes des Sacks (1; 22) und/oder des ersten Deckblatts (10).

11. Sack (1; 22) nach einem der vorherigen Ansprüche, **dadurch gekennzeichnet, dass** der Sackboden (9, 12) ein Kreuzboden ist und dass das erste Deckblatt (10) und/oder das zweite Deckblatt (14) eine im Wesentlichen rechteckige Form aufweisen.

12. Sack (1) nach einem der vorherigen Ansprüche, **dadurch gekennzeichnet, dass** das zweite Deckblatt (14a, 14b) zumindest einen Konturschnitt (31, 32) aufweist.

13. Verfahren zur Herstellung eines Sacks (1; 22) für loses Material (19), wobei der Sack (1; 22) aus einem Schlauchmaterial (6) gebildet ist, welches Schlauchmaterial (6) ein schlauchförmiges Flächengebilde oder ein zu einem Schlauch verbundenes Flachmaterial ist, durch ein Gewebe, ein Nonwoven, eine Folie oder Papier gebildet ist und ein erstes und ein zweites offenes Ende (2, 3) aufweist, die einander gegenüberliegen, **gekennzeichnet durch** die folgenden Schritte:
- Falten von Abschnitten (24) zumindest eines Endes (2, 3) des Schlauchmaterials (6) zu einem Sackboden (9, 12);
- Aufbringen eines ersten Deckblattes (10) auf einen ersten Bereich (11) des Sackbodens (9) zur Verstärkung des Sackbodens (9); und
- Aufbringen eines zweiten Deckblattes (14, 14a, 14b) in einen zweiten Bereich (15) des Sackbodens (9), wobei die Deckblätter (10, 14) die gefalteten Abschnitte (24) des Schlauchmaterials (6) so zusammenhalten, dass der Sackboden (9) verschlossen ist.

14. Verfahren nach Anspruch 13, **dadurch gekennzeichnet, dass** in zumindest einem Sackboden (9, 12) beim Falten des zumindest einen Sackbodens (9, 12) ein Ventilblatt (5) zum Befüllen des Sacks (9, 12) miteingebracht wird.

15. Verfahren nach Anspruch 13 oder 14, **dadurch gekennzeichnet, dass**, wenn beide offenen Enden (9, 12) des Schlauchmaterials (6) zu einem Sackboden (9, 12) geformt werden, auf einen der Sackböden (9, 12) ein drittes Deckblatt (17) zum Verschließen des Sackbodens (9, 12) aufgebracht wird.

16. Verfahren nach Anspruch 15, **dadurch gekennzeichnet, dass** das erste Deckblatt (10) und/oder das zweite Deckblatt (14, 14a, 14b) mit dem Sackboden (9, 12) verklebt oder verschweißt wird.

17. Vorrichtung (25; 27) zur Herstellung eines Sacks (1; 22) gemäß einem der Ansprüche 1 bis 12 aus einem Schlauchmaterial (6) gebildet durch ein schlauchförmiges Flächengebilde oder ein zu einem Schlauch verbundenes Flachmaterial aus Gewebe, Nonwoven, Folie oder Papier, **dadurch gekennzeichnet, dass** die Vorrichtung (25; 27) eine Fördereinrichtung (26) zum Transport des Sacks (1; 22) in Förderrichtung (23) aufweist, wobei das Schlauchmaterial (6) des Sacks (1; 22) mit den offenen Enden (2, 3) quer zu der Förderrichtung (23) flächig auf der Fördereinrichtung (26) aufliegt, zumindest eine Bodenfalteinheit, die zum Falten zumindest eines Endes (2, 3) des Schlauchmaterials (6) zu einem Sackboden (9, 12) ausgebildet ist, eine erste Deckblattaufbringeinheit (13), die ausgebildet ist das erste Deckblatt (10) in den ersten Bereich (11) des Sackbodens (9) aufzubringen, und eine zweite Deckblattaufbringeinheit (16), die ausgebildet ist das zweite Deckblatt (14, 14a, 14b) in den zweiten Bereich (15) des Sackbodens (9) lösbar aufzubringen.

## Claims

1. A bag (1; 22) for loose material (19), wherein the bag (1; 22) is formed from a tubular material (6), which tubular material (6) is a tubular planar assembly or a flat material connected to form a tube, is formed by a fabric, a nonwoven, a film or paper and has a first open end (2) and a second open end (3) opposite each other, wherein sections (24) of the tubular material (6) of at least one of the open ends (2, 3) are shaped by folding to form a bag bottom (9, 12), wherein the bag bottom (9) exhibits a first cover sheet (10), which is designed for reinforcing the bag bottom (9), wherein bag bottom (9) has a second cover sheet (14, 14a, 14b), wherein the first cover sheet (10) is connected to the bag bottom (9) and extends in a first region (11) of the bag bottom (9) and **characterized in that** the second cover sheet (14, 14a, 14b) is detachably connected to the bag bottom (9) and extends in a second region (15) of the bag bottom (9), whereby, via the cover sheets (10, 14, 14a, 14b), the folded sections (24) of the tubular material (6) are held together in such a way that the bag bottom (9) is sealed.

2. A bag (1; 22) according to claim 1, **characterized in that** the sections (24) of the tubular material (6) that are folded to form the bag bottom (9) have at least two lugs (7, 8) which overlap one another at least in sections, abut each other and are held in position by the first and the second cover sheets (10, 14, 14a, 14b), wherein, upon removal of the second cover sheet (14, 14a, 14b), the lugs (7, 8) in the second region (15) can be pulled apart to form an opening (21), whereby the loose material (19) can be discharged from the bag (1; 22).

3. A bag (1; 22) according to claim 2, **characterized in that**, after the removal of the second cover sheet (14, 14a, 14b), the first region (11) of the bag bottom (9) reinforced by the first cover sheet (10) is configured as a handle for holding the bag (1; 22) **in that** the first region (11) between the lugs (7, 8) is available for access.

4. A bag (1; 22) according to any of the preceding claims, **characterized in that** the first region (11) and the second region (15) of the bag bottom (9) overlap, with the second cover sheet (14, 14a, 14b) overlying the first cover sheet (10).

5. A bag (1; 22) according to claim 4, **characterized in that** a region (20) of the second cover sheet (14, 14a, 14b) overlying the first cover sheet (10) is designed as a holding element for removing the second cover sheet (14).

6. A bag (1; 22) according to any of the preceding claims, **characterized in that** a material of the second cover sheet (14, 14a, 14b) differs from a material of the first cover sheet (10) and/or from the tubular material (6) of the bag (1; 22).

7. A bag (1; 22) according to any of the preceding claims, **characterized in that** a grammage of the second cover sheet (14, 14a, 14b) differs from a grammage of the tubular material (6) and/or the first cover sheet (10).

8. A bag (1; 22) according to any of the preceding claims, **characterized in that** a grammage of the second cover sheet (14, 14a, 14b) is higher than a grammage of the tubular material (6) and/or the first cover sheet (10).

9. A bag (1; 22) according to any of the preceding claims, **characterized in that** the first cover sheet (10) and/or the second cover sheet (14, 14a, 14b) and/or the tubular material (6) is/are formed by a fabric, wherein a tape density of the fabric of the second cover sheet (14, 14a, 14b) differs from the tape density of the fabric of the bag (1; 22) and/or the first cover sheet (10).

10. A bag (1; 22) according to any of the preceding claims, **characterized in that** the first cover sheet (10) and/or the second cover sheet (14, 14a, 14b) and/or the tubular material (6) is/are formed by a fabric, wherein a tape density of the fabric of the second cover sheet (14, 14a, 14b) is higher than a tape density of the fabric of the bag (1; 22) and/or the first cover sheet (10).

11. A bag (1; 22) according to any of the preceding claims, **characterized in that** the bag bottom (9, 12) is a cross bottom and the first cover sheet (10) and/or the second cover sheet (14) has/have an essentially rectangular shape.

12. A bag (1) according to any of the preceding claims, **characterized in that** the second cover sheet (14a, 14b) has at least one contour cut (31, 32).

13. A method of producing a bag (1; 22) for loose material (19), wherein the bag (1; 22) is formed from a tubular material (6), which tubular material (6) is a tubular planar assembly or a flat material connected to form a tube, is formed by a fabric, a nonwoven, a film or paper and has a first and a second open end (2, 3) opposite each other, **characterized by** the following steps:
- folding sections (24) of at least one end (2, 3) of the tubular material (6) to form a bag bottom (9, 12);
- applying a first cover sheet (10) onto a first region (11) of the bag bottom (9) for reinforcing the bag bottom (9); and
- applying a second cover sheet (14, 14a, 14b) in a second region (15) of the bag bottom (9), wherein the cover sheets (10, 14) hold the folded sections (24) of the tubular material (6) together in such a way that the bag bottom (9) is sealed.

14. A method according to claim 13, **characterized in that** a valve sheet (5) is introduced into at least one bag bottom (9, 12) simultaneously with the folding of the at least one bag bottom (9, 12) for filling the bag (9, 12).

15. A method according to claim 13 or 14, **characterized in that**, when both open ends (9, 12) of the tubular material (6) are formed into a bag bottom (9, 12), a third cover sheet (17) is applied to one of the bag bottoms (9, 12) for sealing the bag bottom (9, 12).

16. A method according to claim 15, **characterized in that** the first cover sheet (10) and/or the second cover sheet (14, 14a, 14b) is/are glued or welded to the bag bottom (9, 12).

17. A device (25; 27) for producing a bag (1; 22) according to any of claims 1 to 12 from a tubular material (6) formed by a tubular planar assembly or a flat material connected to form a tube and made of a fabric, a nonwoven, a film or paper, **characterized in that** the device (25; 27) comprises a conveying device (26) for transporting the bag (1; 22) in the conveying direction (23), the tubular material (6) of the bag (1; 22) lying flatly on the conveying device (26) with the open ends (2, 3) transversely to the conveying direction (23), at least one bottom folding unit, which is designed for folding at least one end (2, 3) of the tubular material (6) to form a bag bottom (9, 12), a first cover sheet application unit (13), which is designed for applying the first cover sheet (10) in the first region (11) of the bag bottom (9), and a second cover sheet application unit (16), which is designed for applying the second cover sheet (14, 14a, 14b) in the second region (15) of the bag bottom (9) in a detachable manner.

## Revendications

1. Sac (1 ; 22) pour matière en vrac (19), le sac (1 ; 22) étant formé à partir d'un matériau tubulaire (6), lequel matériau tubulaire (6) est une feuille en forme de tube ou un matériau plat relié pour former un tube et est formé au moyen d'un tissu, d'un non-tissé, d'une feuille ou de papier et présente une première extrémité ouverte (2) et une seconde extrémité ouverte (3) qui sont situées l'une en face de l'autre, des sections (24) du matériau tubulaire (6) d'au moins l'une des extrémités ouvertes (2, 3) étant formées par pliage en un fond de sac (9, 12), le fond de sac (9) présentant une première feuille de couverture (10), laquelle feuille de couverture est conçue de manière à renforcer le fond de sac (9), le fond de sac (9) présentant une deuxième feuille de couverture (14, 14a, 14b), la première feuille de couverture (10) étant reliée au fond de sac (9) et s'étendant dans une première zone (11) du fond de sac (9), et **caractérisé en ce que** la deuxième feuille de couverture (14, 14a, 14b) est reliée de manière amovible au fond de sac (9) et s'étend dans une seconde zone (15) du fond de sac (9), les sections pliées (24) du matériau tubulaire (6) étant maintenues par les feuilles de couverture (10, 14, 14a, 14b) de telle sorte que le fond de sac (9) soit fermé.

2. Sac (1 ; 22) selon la revendication 1, **caractérisé en ce que** les sections (24) du matériau tubulaire (6) pliées pour former un fond de sac (9) présentent au moins deux languettes (7, 8) qui se recouvrent mutuellement au moins par sections, sont en appui l'une contre l'autre et sont maintenues en position par la première et la deuxième feuille de couverture (10, 14, 14a, 14b), position dans laquelle les languettes (7, 8) dans la seconde zone (15) peuvent être écartées dans le but de former une ouverture (21) lorsque la deuxième feuille de couverture (14, 14a, 14b) est retirée, ouverture par laquelle la matière en vrac (19) peut être évacuée du sac (1 ; 22).

3. Sac (1 ; 22) selon la revendication 2, **caractérisé en ce que**, après le retrait de la deuxième feuille de couverture (14, 14a, 14b), la première zone (11) du fond de sac (9) renforcée par la première feuille de couverture (10) se présente sous la forme d'une poignée pour tenir le sac (1 ; 22) en laissant accessible la première zone (11) entre les languettes (7, 8).

4. Sac (1 ; 22) selon l'une quelconque des revendications précédentes, **caractérisé en ce que** la première zone (11) et la seconde zone (15) du fond de sac (9) se chevauchent, la deuxième feuille de couverture (14, 14a, 14b) recouvrant la première feuille de couverture (10).

5. Sac (1 ; 22) selon la revendication 4, **caractérisé en ce qu'**une zone (20) de la deuxième feuille de couverture (14, 14a, 14b) qui recouvre la première feuille de couverture (10) se présente sous la forme d'un élément de retenue pour le retrait de la deuxième feuille de couverture (14).

6. Sac (1 ; 22) selon l'une quelconque des revendications précédentes, **caractérisé en ce qu'**un matériau de la deuxième feuille de couverture (14, 14a, 14b) est différent d'un matériau de la première feuille de couverture (10) et/ou du matériau tubulaire (6) du sac (1 ; 22).

7. Sac (1 ; 22) selon l'une quelconque des revendications précédentes, **caractérisé en ce qu'**un grammage de la deuxième feuille de couverture (14, 14a, 14b) est différent d'un grammage du matériau tubulaire (6) et/ou de la première feuille de couverture (10).

8. Sac (1 ; 22) selon l'une quelconque des revendications précédentes, **caractérisé en ce qu'**un grammage de la deuxième feuille de couverture (14, 14a, 14b) est supérieur à un grammage du matériau tubulaire (6) et/ou de la première feuille de couverture (10).

9. Sac (1 ; 22) selon l'une quelconque des revendications précédentes, **caractérisé en ce que** la première feuille de couverture (10) et/ou la deuxième feuille de couverture (14, 14a, 14b) et/ou le matériau tubulaire (6) est (sont) formé(e)(s) au moyen d'un tissu, une densité de bandelette de tissu de la deuxième feuille de couverture (14, 14a, 14b) étant différente de la densité de bandelette de tissu du sac (1 ; 22) et/ou de la première feuille de couverture (10).

10. Sac (1 ; 22) selon l'une quelconque des revendications précédentes, **caractérisé en ce que** la première feuille de couverture (10) et/ou la deuxième feuille de couverture (14, 14a, 14b) et/ou le matériau tubulaire (6) est (sont) formé(e)(s) au moyen d'un tissu, une densité de bandelette de tissu de la deuxième feuille de couverture (14, 14a, 14b) étant supérieure à une densité de bandelette de tissu du sac (1 ; 22) et/ou de la première feuille de couverture (10).

11. Sac (1 ; 22) selon l'une quelconque des revendications précédentes, **caractérisé en ce que** le fond de sac (9, 12) est un fond en forme de croix, et **en ce que** la première feuille de couverture (10) et/ou la deuxième feuille de couverture (14) présentent une forme sensiblement rectangulaire.

12. Sac (1) selon l'une quelconque des revendications précédentes, **caractérisé en ce que** la deuxième feuille de couverture (14a, 14b) présente au moins une découpe de contour (31, 32).

13. Procédé pour la fabrication d'un sac (1 ; 22) pour matière en vrac (19), le sac (1 ; 22) étant formé à partir d'un matériau tubulaire (6), lequel matériau tubulaire (6) est une feuille en forme de tube ou un matériau plat relié pour former un tube et est formé au moyen d'un tissu, d'un non-tissé, d'une feuille ou de papier et présente une première et une seconde extrémités ouvertes (2, 3) qui sont situées l'une en face de l'autre, **caractérisé par** les étapes suivantes :
- plier des sections (24) d'au moins une extrémité (2, 3) du matériau tubulaire (6) de manière à former un fond de sac (9, 12) ;
- appliquer une première feuille de couverture (10) sur une première zone (11) du fond de sac (9) dans le but de renforcer le fond de sac (9) ; et
- appliquer une deuxième feuille de couverture (14, 14a, 14b) dans une seconde zone (15) du fond de sac (9), les feuilles de couverture (10, 14) maintenant les sections pliées (24) du matériau tubulaire (6) de telle sorte que le fond de sac (9) soit fermé.

14. Procédé selon la revendication 13, **caractérisé en ce que**, lors du pliage dudit au moins un fond de sac (9, 12), une valve (5) destinée à remplir le sac (9, 12) est intégrée dans au moins un fond de sac (9, 12).

15. Procédé selon la revendication 13 ou 14, **caractérisé en ce que**, lorsque les deux extrémités ouvertes (9, 12) du matériau tubulaire (6) sont formées en un fond de sac (9 12), une troisième feuille de couverture (17) destinée à fermer le fond de sac (9, 12) est appliquée sur l'un des fonds de sac (9, 12).

16. Procédé selon la revendication 15, **caractérisé en ce que** la première feuille de couverture (10) et/ou la deuxième feuille de couverture (14, 14a, 14b) est collée ou soudée avec le fond de sac (9, 12).

17. Dispositif (25 ; 27) pour la fabrication d'un sac (1 ; 22) selon l'une quelconque des revendications 1 à 12 à partir d'un matériau tubulaire (6) formé au moyen d'une feuille en forme de tube ou d'un matériau plat en tissu, en non-tissé, en feuille ou en papier, relié pour former un tube, **caractérisé en ce que** le dispositif (25 ; 27) présente un dispositif de transport (26) pour transporter le sac (1 ; 22) dans la direction de transport (23), le matériau tubulaire (6) du sac (1 ; 22) reposant à plat sur le dispositif de transport (26) avec les extrémités ouvertes (2, 3) disposées transversalement à la direction de transport (23), au moins une unité de pliage de fond qui est conçue de manière à plier au moins une extrémité (2, 3) du matériau tubulaire (6) pour former un fond de sac (9, 12), une première unité d'application (13) de feuille de couverture qui est conçue de manière à appliquer la première feuille de couverture (10) dans la première zone (11) du fond de sac (9), et une seconde unité d'application (16) de feuille de couverture qui est conçue de manière à appliquer la deuxième feuille de couverture (14, 14a, 14b) de façon amovible dans la seconde zone (15) du fond de sac (9).
